# EUROPEAN PATENT SPECIFICATION

(11) **EP 1 844 992 B1**
(45) Date of publication and mention of the grant of the patent: **22.12.2010**
(21) Application number: 07014860.6
(22) Date of filing: 07.05.2004
(51) Int. Cl.: B60R 21/20, B60R 21/16, B60R 21/237

(54) **Passenger-leg-protection device**
Insassenbeinschutzvorrichtung
Dispositif de protection des jambes du passager

(30) Priority: 30.05.2003 JP 2003155042; 10.07.2003 JP 2003195147; 26.12.2003 JP 2003432731
(43) Date of publication of application: 17.10.2007
(62) Divisional of application: 04010975.3
(73) Proprietor: TAKATA CORPORATION, Minato-ku, Tokyo 106-8510 (JP)
(72) Inventor: Kawauchimaru, Masatoshi, Minato-ku, Tokyo 106-8510 (JP); Kumagai, Masayoshi, Minato-ku, Tokyo 106-8510 (JP)
(74) Representative: Banzer, Hans-Jörg

(56) References cited:
- EP-A- 0 957 007
- EP-A- 1 310 408
- PATENT ABSTRACTS OF JAPAN vol. 2003, no. 01, 14 January 2003 (2003-01-14) -& JP 2002 249016 A (TOYODA GOSEI CO LTD), 3 September 2002 (2002-09-03)

## Description

### [Technical Field]

The present invention relates to a passenger-leg-protection device provided to an instrument panel of a vehicle, and particularly to a device wherein an airbag, which is referred to as "knee bag" or "air knee bag", is inflated in front of the legs at the time of collision of the vehicle for protecting the legs of the passenger in a high-speed transporting object such as a vehicle or the like.

### [Background Art]

A passenger-leg-protection device has been well known wherein an airbag device is included in an interior member in front of a seat in an automobile, around the height of the lower part of the legs of the passenger, and is inflated at the time of collision of the automobile for receiving the legs of the passenger, particularly, the lower portions from the knees. The passenger-leg-protection device comprises a folded airbag, a casing storing the airbag, a gas generator for inflating the airbag, a lid member for covering the front face of the casing, and the like.

An arrangement is described in Paragraph 0024 through Paragraph 0026 with reference to Fig. 7 and Fig. 8 in Japanese Unexamined Patent Application Publication No. 2002-249016, which serves as basis for the preamble of claim 1 and wherein both the left and right sides of an airbag are accordion-folded against the instrument panel side such that the width of the airbag is smaller than the width of the casing, following which the airbag is roll-folded into a roll-folded portion such that the roll axis matches the horizontal direction as to the passenger, for storing the folded article into the casing.

### [Problems to be Solved by the Invention]

The airbag folded portion disclosed in Japanese Unexamined Patent Application Publication No. 2002-249016 is formed by roll-folding and accordion-folding, and there is the need to employ a high-performance inflator for quick completion of inflation of the airbag folded portion.

It is an object of the present invention to provide a passenger-leg-protection device enabling quick completion of inflation of an airbag thereof without necessitating increasing the performance of gas generating means thereof.

### [Means for Solving the Problems]

According to the present invention, this object is achieved by a passenger-leg-protection device as defined in claim 1. The dependent claims define preferred and advantageous embodiments of the invention.

A passenger-leg-protection device according to an aspect of the present invention comprises: an airbag for inflating in front of the leg portions of the passenger in order to protect the leg portions; a casing for storing the folded airbag; and gas generating means for inflating the airbag, wherein the airbag is formed of panels of a front panel for facing the passenger at the time of completion of inflation, and a rear panel disposed on the opposite side from the front panel, and the airbag is folded into a folded portion having a configuration wherein at least a part of the perimeter of the airbag at the time of completion of inflation is folded inward between the front panel and the rear panel.

The folded portion of the airbag may have a configuration wherein the upper side of the airbag at the time of completion of inflation is folded inward between the front panel and the rear panel.

According to a preferred embodiment of the invention, the folded portion of the airbag has a configuration wherein the side portions of the airbag at the time of completion of inflation are folded inward between the front panel and the rear panel.

The folded portion of the airbag may have a configuration wherein the upper side and the side portions of the airbag at the time of completion of inflation are folded inward between the front panel and the rear panel.

It is preferable that the folded portion of the airbag has a configuration wherein the lower side of the airbag at the time of completion of inflation is folded inward between the front panel and the rear panel.

The front panel and the rear panel may form a single pleated portion on the perimeter of the folded portion of the airbag, folded inward between the front panel and the rear panel.

The front panel and the rear panel may also form two or more pleated portions on the perimeter of the folded portion of the airbag, folded inward between the front panel and the rear panel.

It is preferable that the airbag is roll-folded as to a rolling axis extending in the horizontal direction of the passenger, into a roll-folded portion, following which both the left and right sides of the roll-folded portion are folded back, whereby the folded portion of the airbag is formed.

According to the invention, the lower portion of the airbag is expanded below the casing prior to folding, following which the upper portion above the lower portion is roll-folded as to a rolling axis extending in the horizontal direction, and the lower portion is folded back so as to be overlaid on the roll-folded portion on the passenger side, following which both the left and right sides of the roll-folded portion are folded back so as to be overlaid on the lower portion on the passenger side, whereby the folded portion is formed.

The folded portion of the airbag may have a configuration wherein both the left and right sides of the roll-folded portion are accordion-folded so as to be stored within the casing.

The folded portion of the airbag may also have a configuration wherein both the left and right sides of the roll-folded portion are roll-folded so as to be stored within the casing.

### [Advantages]

With the passenger-leg-protection device according to the present invention, at the time of emergency such as collision of a vehicle, an airbag is inflated by gas generating means operating so as to receive the leg portions of the passenger. The folded portion of the airbag has a configuration wherein at least a part of the perimeter thereof is folded inward so as to be taken into the airbag between the front panel and rear panel, and accordingly, immediately prior to completion of inflation, the part which has been taken into the airbag extends outward so as to protrude as if the aforementioned part is being discharged from the inner side of the airbag. In this case, the aforementioned part which has been taken into the airbag is forced outward due to the pressure of the gas within the airbag, thereby enabling the perimeter of the airbag, which has been taken into the airbag, to expand smoothly and quickly without necessitating an increase of the pressure of the gas within the airbag.

With one arrangement of the present invention, the upper side of the airbag at the time of completion of inflation is folded inward between the front panel and the rear panel. In this case, the upper side of the airbag extends smoothly and quickly, immediately prior to completion of inflation.

With another arrangement of the present invention, the side portions of the airbag at the time of completion of inflation are folded inward between the front panel and the rear panel. In this case, the side portions of the airbag extend smoothly and quickly, immediately prior to completion of inflation.

With another arrangement of the present invention, the upper side and the side portions of the airbag at the time of completion of inflation are folded inward between the front panel and the rear panel. In this case, the upper side and the side portions of the airbag extend smoothly and quickly, immediately prior to completion of inflation.

According to the present invention, an arrangement may be made wherein the lower side of the airbag at the time of completion of inflation is folded inward between the front panel and the rear panel, as well as the aforementioned upper side and side portions of the airbag at the time of completion of inflation. In this case, the lower side of the airbag extends smoothly and quickly, immediately prior to completion of inflation in the same way.

According to the present invention, an arrangement may be made wherein the front panel and the rear panel form a single pleated portion on the perimeter of the folded portion of the airbag, folded inward between the front panel and the rear panel, and furthermore, an arrangement may be made wherein the two or more pleated portions are formed in the same way. Such an arrangement wherein the two or more pleated portions have been formed enables smoother and quicker expansion of the aforementioned portion immediately prior to completion of inflation. Note that an arrangement wherein the single pleated portion has been formed improves workability for folding the airbag as compared with an arrangement wherein the two or more pleated portions are formed.

According to the present invention, an arrangement may be made wherein the folded portion of the airbag has a configuration wherein the airbag is roll-folded as to a rolling axis extending in the horizontal direction of the passenger, following which both the left and right sides of the roll-folded portion is folded back. With such an arrangement, first, the roll-folded is formed, thereby reducing the diameter of the roll-folded portion following rolling.

According to the present invention, an arrangement is made wherein the lower portion of the airbag is expanded below the casing prior to folding, following which the upper portion above the aforementioned lower portion is roll-folded as to a rolling axis extending in the horizontal direction, into a roll-folded portion, and the aforementioned lower portion is folded back so as to be overlaid on the aforementioned roll-folded portion on the passenger side, following which both the left and the right sides of the aforementioned roll-folded portion are folded back so as to be overlaid on the aforementioned lower portion on the passenger side, whereby the aforementioned folded portion is formed.

With such an arrangement wherein the airbag has been thus folded, at the time of inflation of the airbag, first, the lower portion of the airbag is inflated. Subsequently, both the left and right sides of the roll-folded portion which have been folded on the aforementioned lower portion on the passenger side are pushed out from the casing at the same time of inflation of the lower portion of the airbag. Accordingly, both the left and the right sides of the roll-folded portion, thus folded, come loose in the early stage of inflation, thereby enabling smooth and quick expansion of the aforementioned roll-folded portion.

According to the present invention, an arrangement may be made wherein both the left and the right sides of the roll-folded portion are accordion-folded so as to be stored within the casing, or an arrangement may be made wherein both the left and the right sides of the roll-folded portion are roll-folded so as to be stored within the casing. An arrangement employing accordion-folding enables quick expansion of the airbag in the horizontal direction. On the other hand, with an arrangement employing roll-folding, the folded portion do not readily come loose at the time of being stored within the casing, thereby improving workability.

### [Brief Description of the Drawings]

Fig. 1 is a diagram for describing a procedure for folding an airbag .
Fig. 2 is a diagram for describing the procedure for folding the airbag.
Fig. 3 is a diagram for describing the procedure for folding the airbag.
Fig. 4 is a diagram for describing the procedure for folding the airbag.
Fig. 5 is a diagram for describing the procedure for folding the airbag.
Fig. 6 is a diagram for describing the procedure for folding the airbag.
Fig. 7 is an explanatory diagram for describing the inflating state of the airbag.
Fig. 8 is an explanatory diagram for describing the inflating state of the airbag.
Fig. 9 is a diagram for describing another procedure for folding an airbag.
Fig. 10 is a diagram for describing yet another procedure for folding an airbag.
Fig. 11 is a diagram for describing the procedure for folding the airbag according to an embodiment.
Fig. 12 is a diagram for describing the procedure for folding the airbag according to the embodiment.
Fig. 13 is a diagram for describing the procedure for folding the airbag according to the embodiment.
Fig. 14 is a diagram for describing the procedure for folding the airbag according to the embodiment.
Fig. 15 is a diagram for describing the procedure for folding the airbag according to the embodiment.
Fig. 16 is a diagram for describing a procedure for folding according to another embodiment.
Fig. 17 is a diagram for describing the procedure for folding according to the other embodiment.
Fig. 18 is a diagram for describing the procedure for folding according to the other embodiment.
Fig. 19 is a diagram for describing the procedure for folding according to the other embodiment.
Fig. 20 is a diagram for describing the procedure for folding according to the other embodiment.
Fig. 21 is a diagram for describing the procedure for folding according to the other embodiment.
Fig. 22 is a diagram for describing the procedure for folding according to the other embodiment.
Fig. 23 is a diagram for describing the procedure for folding according to the other embodiment.
Fig. 24 is a diagram for describing the procedure for folding according to the other embodiment.
Fig. 25 is a diagram for describing the procedure for folding according to the other embodiment.
Fig. 26 is a diagram for describing the procedure for folding according to the other embodiment.
Fig. 27 is a diagram for describing the procedure for folding according to the other embodiment.

### [Best Mode for Carrying Out the Invention]

Description will be made regarding embodiments with reference to the drawings.

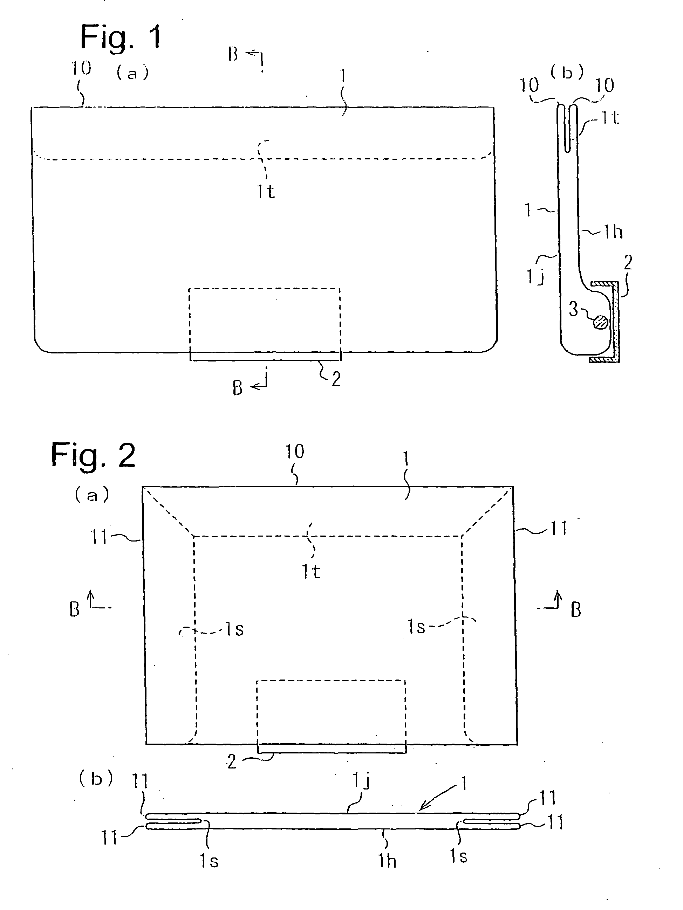

The devices of Figs. 1-10 by themselves do not represent embodiments of the claims.

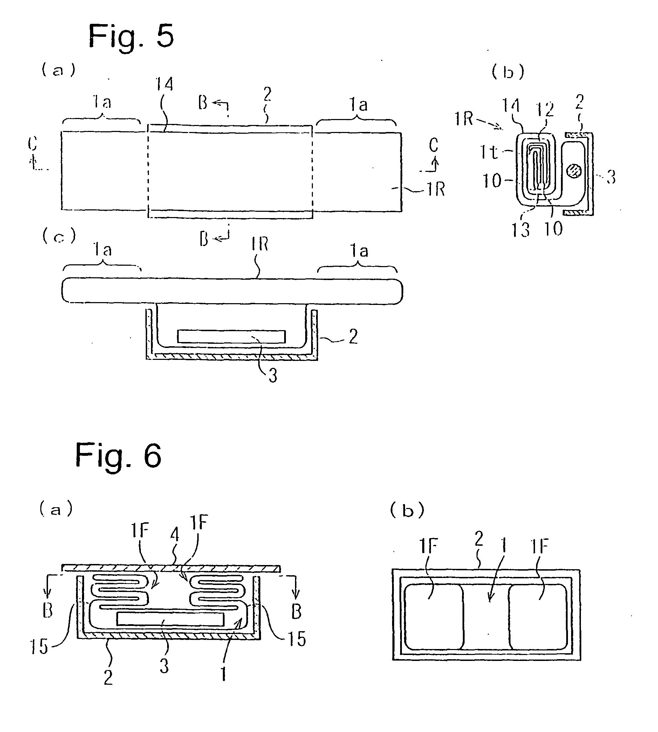

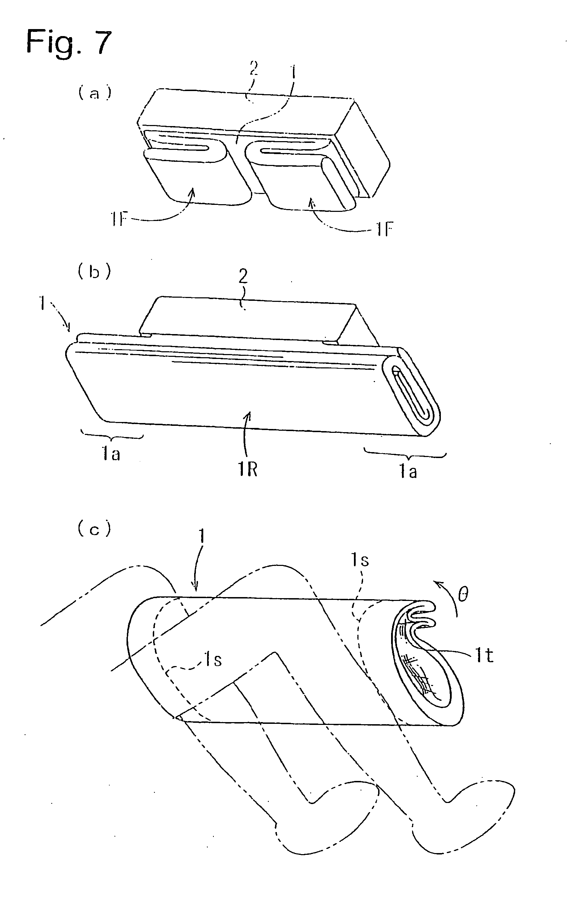

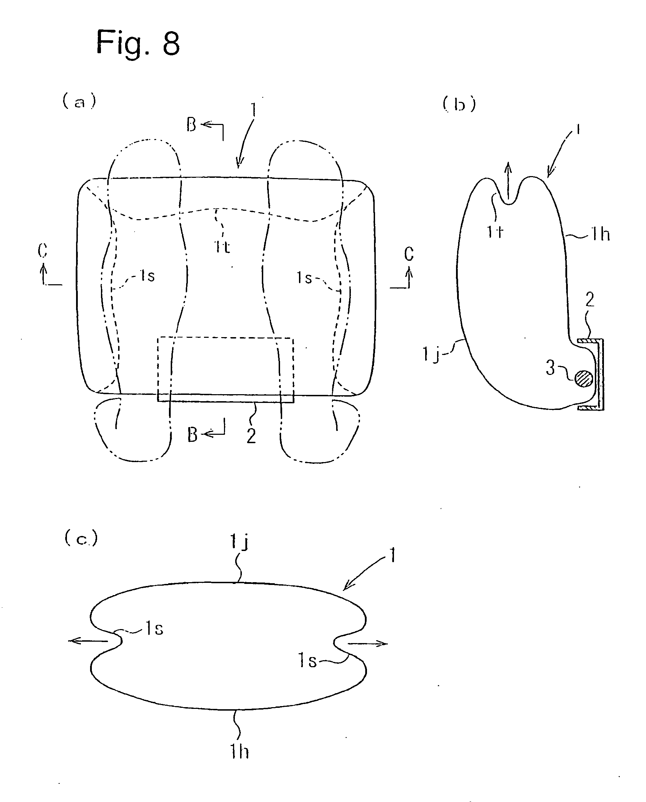

Fig. 1 through Fig. 6 are explanatory diagrams which shows an airbag-folding procedure for passenger-leg-protection devices, wherein Fig. (b) in each is a cross-sectional diagram taken along line B-B in the corresponding Fig. (a). Fig. 5(c) is a cross-sectional diagram taken along line C-C in Fig. 5(a). Fig. 7(a), Fig. 7(b), Fig. 7(c), and Fig. 8, are explanatory diagrams for describing inflating state of the airbag. Fig. 8(b) and Fig. 8(c) are cross-sectional diagrams taken along line B-B, and a cross-sectional diagram taken along line C-C, in Fig. 8(a), respectively.

With the passenger-leg-protection device, the airbag (knee airbag) 1 includes a front panel 1j which faces the passenger at the time of completion of inflation of the airbag 1, and a rear panel 1h on the rear side of the front panel 1j, and is formed in the shape of a flat bag with the perimeters of the panels 1j and 1h in continuation.

The passenger-leg-protection device includes the airbag 1, a casing 2 for storing the folded airbag 1, an inflator 3 serving as a gas generator for inflating the airbag 1, a lid 4 (Fig. 6) for covering the front opening of the casing 2. Note that the inflator 3 is disposed within the airbag 1. Stud bolts (not shown) protrude from the inflator 3 or a holder (not shown) for holding the inflator 3 so as to pass through the lower portion of the rear panel 1h of the airbag 1 and the rear face of the casing 2, and are fixed with nuts (not shown). By fixing the stud bolts with the nuts as described above, the rear end of the airbag 1 is held between the inflator 3 or the holder thereof and the rear face of the casing 2, as well as the inflator 3 being fixed to the casing 2.

Description will be made below regarding a procedure for folding the airbag 1. Note that while the airbag 1 is expanded flat, following which the airbag 1 is folded while being placed on a flat working bench along with the casing 2, the airbag 1 is shown with the airbag 1 being expanded along the perpendicular face in Fig. 1, Fig. 2(a), Fig. 3, Fig. 4, Fig. 5(a), and Fig. 5(b), and Fig. 6(b), in order to describe the state wherein the passenger-leg-protection device has been mounted on a vehicle. The passenger-leg-protection device is shown with the vertical direction in each diagram generally matching the vertical direction of the passenger-leg-protection device mounted in an automobile in Fig. 1, Fig. 2 (a), Fig. 3, Fig. 4, Fig. 5(a), and Fig. 5(b), Fig. 6(b), and Fig. 7.

The airbag 1 is extracted from the casing 2, and is expanded flat. In the present device, the airbag 1 is expanded upward from the casing 2. Next, as shown in Fig. 1, the portion along the upper side (upper end) of the airbag 1 is folded along the horizontal folding line 10 so as to be taken into the airbag 1, whereby a pleated portion 1t is formed of the upper end of the airbag 1 between the front panel 1j and the rear panel 1h. Furthermore, with the present device, both the left and right sides (side ends) of the airbag 1 are folded inward along the vertical pleat line 11 so as to be taken into the airbag 1, whereby pleated portions 1s and 1s are formed of the left end and the right end of the airbag 1 between the front panel 1j and the rear panel 1h, as shown in Fig. 2.

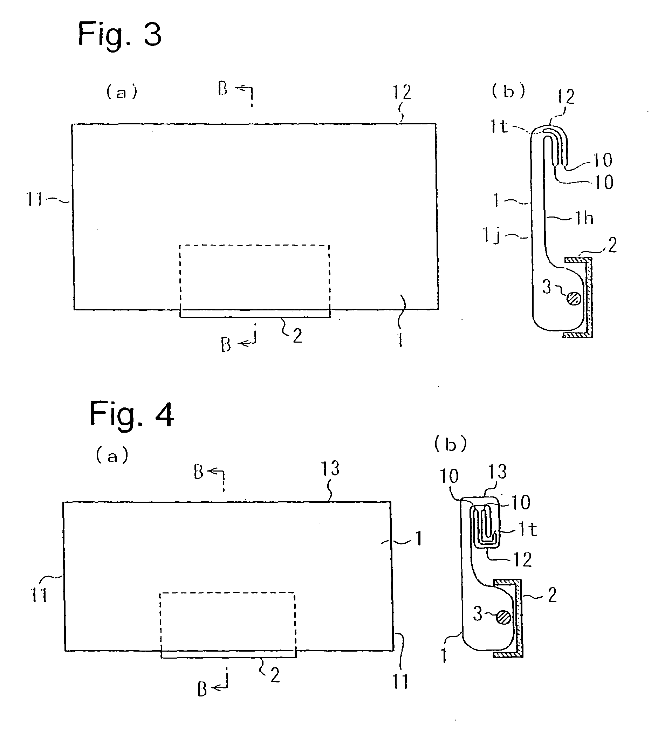

Subsequently, as shown in Fig. 3, the airbag 1 is folded back along a horizontal folding line 12 with a predetermined width (e.g., 20 through 150 mm) away from the aforementioned horizontal folding line 10 from the side of the front panel 1j to the side of the rear panel 1h.

Next, as shown in Fig. 4, the airbag 1 is further folded back along a horizontal folding line 13 generally with generally the same width as the aforementioned predetermined width downward from the aforementioned horizontal folding line 12 from the side of the front panel 1j to the side of the rear panel 1h. Furthermore, as shown in Fig. 5, the airbag 1 is further folded back along a horizontal folding line 14 with generally the same width as the aforementioned predetermined width downward from the aforementioned horizontal folding line 13 from the side of the front panel 1j to the side of the rear panel 1h. Each fold along the folding lines 12, 13, and 14, is made in the same direction, whereby a roll-shaped airbag intermediate folded portion (which will be referred to as "roll-folded portion" hereafter) 1R is formed as shown in Fig. 5(b). Fig. 5(b) is a cross-sectional diagram which shows the roll-folded portion 1R with the airbag 1 rolled clockwise as to the rolling center (folding line 10) in a cross-sectional view of the vehicle taken along the front-back direction, with the passenger at the left side thereof.

The roll-folded portion 1R has extending portions 1a extending from both the left and right sides of the casing 2 as shown in Fig. 5(a) and 5(c). Accordingly, the extending portions 1a are folded back at the base ends (the bases portion where the airbag protrudes from the casing 2) along the vertical folding lines 15 (see Fig. 6(a)) to the passenger side (upper side in Fig. 5(c) and Fig. 6(a)) such that the folded portions are overlaid on the face of the roll-folded portion 1R on the passenger side, and furthermore, the remaining portions thereof are folded back zigzag a necessary number of times to the passenger side so as to form an accordion-shaped compact folded portion (which will be referred to as "accordion-folded portion" hereafter) 1F, which is stored within the casing 2. Subsequently, the lid 4 is mounted on the casing 2, whereby the passenger-leg-protection device is formed.

Note that the panels 1j and 1h rolled inward into the roll-folded portion 1R and each pleated portion 1s are not shown in Fig. 5(c) and Fig. 6(a) in order to facilitate viewing the drawings.

The passenger-leg-protection device is provided within an interior panel in front of a seat, for example, such that the lid 4 and the interior panel form a flat face.

In the event that the airbag 1 of the passenger-leg-protection device is inflated by the inflator 3 operating due to collision of the automobile, the lid 4 is opened due to being pushed by the airbag 1, and the accordion-pleated portion 1F of the airbag 1 protrudes in front of the casing 2 as shown in Fig. 7(a). Subsequently, as shown in Fig. 7(b), the accordion-folded portion 1F comes loose, and the accordion-folded portion 1F extends in the horizontal direction as to the legs of the passenger, following which the roll-folded portion 1R of the airbag 1 extends upward.

The aforementioned roll-folded portion 1R wherein the airbag 1 has been rolled clockwise in a cross-sectional view of the passenger being on the left side thereof in the vehicle extends upward in front of the legs of the passenger while rotating in the counterclockwise direction θ in the cross-sectional view, as shown in Fig. 7(c). In this case, the roll-folded portion 1R comes loose so as to rotate in front of the legs, and accordingly, the roll-folded portion 1R smoothly extends without the roll-folded portion 1R snagging in front of the legs. Immediately following the roll-folded portion 1R coming loose, the pleated portions 1t, 1s, and 1s, formed of the upper end and the side ends of the airbag, respectively, which have been folded so as to be taken into the airbag 1, extend so as to protrude outward, as if the pleated portions are being discharged from the inner side of the airbag 1, as shown in Fig. 8, whereby expansion of the airbag 1 is completed.

With the passenger-leg-protection device, at the time of expansion of the upper end and both the left and right side ends of the airbag, folded so as to be taken into the airbag as pleated portions 1t, 1s, and 1s, respectively, the upper end and both the left and right side ends of the airbag are forced outward due to the gas pressure within the airbag, thereby enabling smooth and quick expansion of the upper end and both the left and right side ends of the airbag 1 without necessitating increasing the performance of the inflator 3.

With the present device, at the time of folding the airbag 1, the airbag 1 is folded back along the horizontal folding lines 12, 13, and 14, to the side of the rear panel 1h (roll-folded), into the roll-folded portion 1R, following which the extending portions 1a of the roll-folded portion 1R extending from both the left and right sides of the casing 2 are folded so as to be overlaid on the roll-folded portion 1R on the passenger side. As described above, first, the airbag 1 is roll-folded into the roll-folded portion 1R, thereby reducing the diameter of the roll-folded portion 1R following rolling.

With the present device, the extending portions 1a are folded in the shape of an accordion, into the accordion-folded portion 1F, so as to be stored within the casing 2, thereby enabling quick expansion of the extending portions 1a at the time of inflation of the airbag.

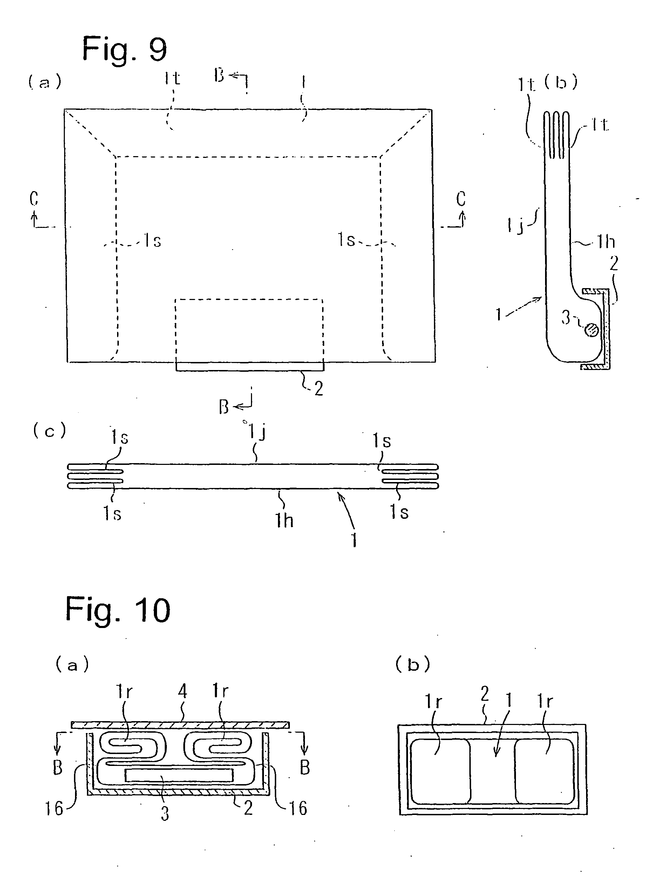

In the above-described device, while description has been made regarding an arrangement wherein each of the pleated portions 1t, 1s, and 1s, are formed of the upper end and both the left and the right ends of the airbag between the front panel 1j and the rear panel 1h of the airbag 1, according to the present invention, an arrangement may be made wherein two each of the pleated portions 1t, 1s, and 1s, are formed as shown in Fig. 9, and furthermore, an arrangement may be made wherein three or more each of the pleated portions 1t, 1s, and 1s, are formed. With such an arrangement, two or more each of the pleated portions 1t, 1s, and 1s, are formed, thereby enabling smoother and quicker expansion of the upper end and both the left and right side ends of the airbag. Note that an arrangement may be made wherein the number of the pleated portions of the upper end of the airbag is different from that of both the left and right side ends thereof, and furthermore, an arrangement may be made wherein the number of the pleated portions of the left end of the airbag is different from that of the right end thereof.

Note that Fig. 9(a) is a plan view in a case of forming two each of pleated portions 1t, 1s, and 1s, at the point-in-time as in Fig. 2(a), and Fig. 9(b) and Fig. 9(c) are cross-sectional diagrams taken along line B-B, and line C-C, in Fig. 9(a), respectively.

According to the present invention, an arrangement may be made wherein the pleated portions are formed on the portion of the airbag, other than the upper end or the side ends of the airbag, e.g., across the corner of the airbag 1 by a portion across a corner of the airbag 1 being folded so as to be taken into the airbag. Furthermore, an arrangement may be made wherein the pleated portions are formed on only a single portion of the perimeter of the airbag, and furthermore, an arrangement may be made wherein the pleated portions are formed on multiple portions thereof.

In the above-described device, while description has been made regarding an arrangement wherein each of the pleated portions 1t, 1s, and 1s, are formed, following which the airbag 1 is roll-folded into the intermediate folded portion (roll-folded portion 1R), an arrangement may be made wherein the airbag is folded with other folding methods, e.g., the accordion-folding method, or the like, into the aforementioned intermediate folded portion.

Furthermore, an arrangement may be made wherein the extending portions 1a of the intermediate folded portion extending from the casing 2 are folded with a folding method other than the accordion-folded method. For example, Fig. 10 shows an arrangement wherein the extending portions 1a (see Fig. 5) are folded back on the passenger side (the upper side in Fig. 10) along the vertical folding line 16 at the base end thereof, following which the remaining portions are roll-folded into compact roll-folded portions 1r so as to be stored within the casing 2. With such an arrangement wherein the roll-folded extending portions 1a have been stored within the casing 2, the compact roll-folded portions 1r do not readily come loose, thereby improving workability.

Note that Fig. 10(a) is a cross-sectional diagram which shows an arrangement wherein the extending portions 1a of the airbag 1 extending from the casing 2 are roll-folded so as to be stored within the casing 2 in the same way as in Fig. 6(a), and Fig. 10(b) is a cross-sectional diagrams taken along line B-B in Fig. 10(a).

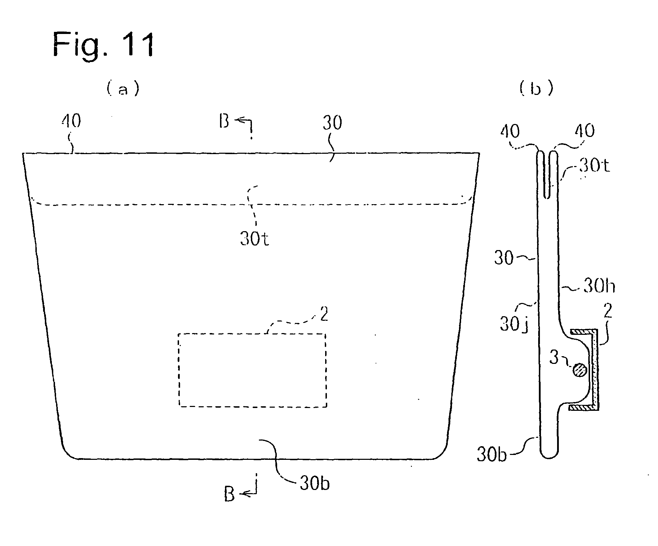

Next, description will be made regarding an embodiment with reference to Fig. 11 through Fig. 15.

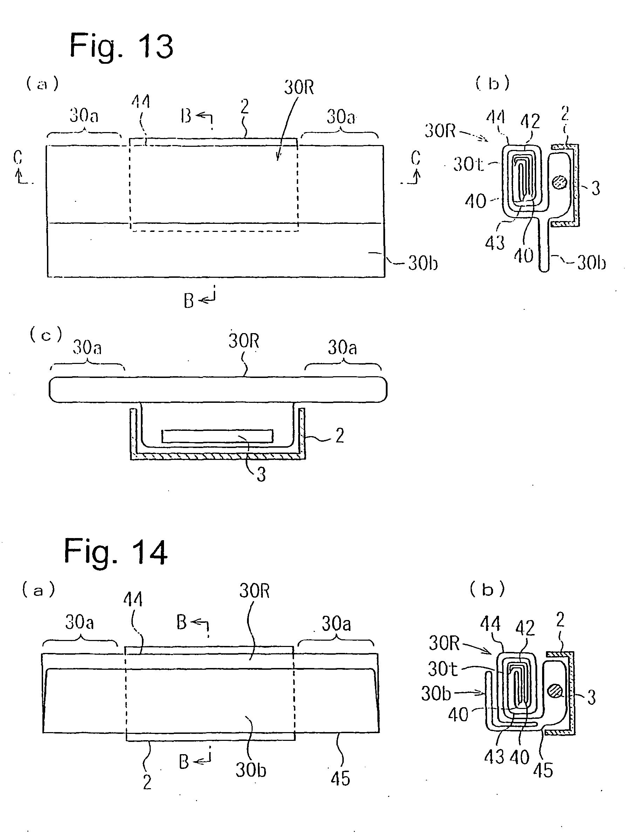

Fig. 11 through Fig. 15 are explanatory diagrams for describing an airbag-folding procedure for a passenger-leg-protection device according to an embodiment, wherein Fig. (b) in each is a cross-sectional diagram taken along line B-B in the corresponding Fig. (a). Fig. 13(c) is a cross-sectional diagram taken along line C-C in Fig. 13(a).

Description will be made below regarding a procedure for folding the airbag 30 according to the present embodiment. Note that with the present embodiment, while the airbag 30 is expanded flat, following which the airbag 30 is folded while being placed on a flat working bench, the airbag 30 is shown with the airbag 30 being expanded along the perpendicular face in Fig. 11, Fig. 12(a), Fig. 13(a), Fig. 13(b), Fig. 14, and Fig. 15(b), in order to describe the state wherein the passenger-leg-protection device has been mounted on an automobile. Furthermore, the passenger-leg-protection device is shown with the vertical direction in each diagram generally matching the vertical direction of the passenger-leg-protection device mounted in an automobile in the aforementioned drawings.

First, the airbag 30 is extracted from the casing 2, and is expanded flat. With the present embodiment, at the same time, a lower portion 30b of the airbag 30 is expanded downward from the casing 2, as shown in Fig. 11.

Next, the airbag 30 is folded along a horizontal folding line 40 such that the upper side thereof is taken into the airbag 30, so as to form a pleated portion 30t, formed of the upper side of the airbag, between the front panel 30j and the rear panel 30h.

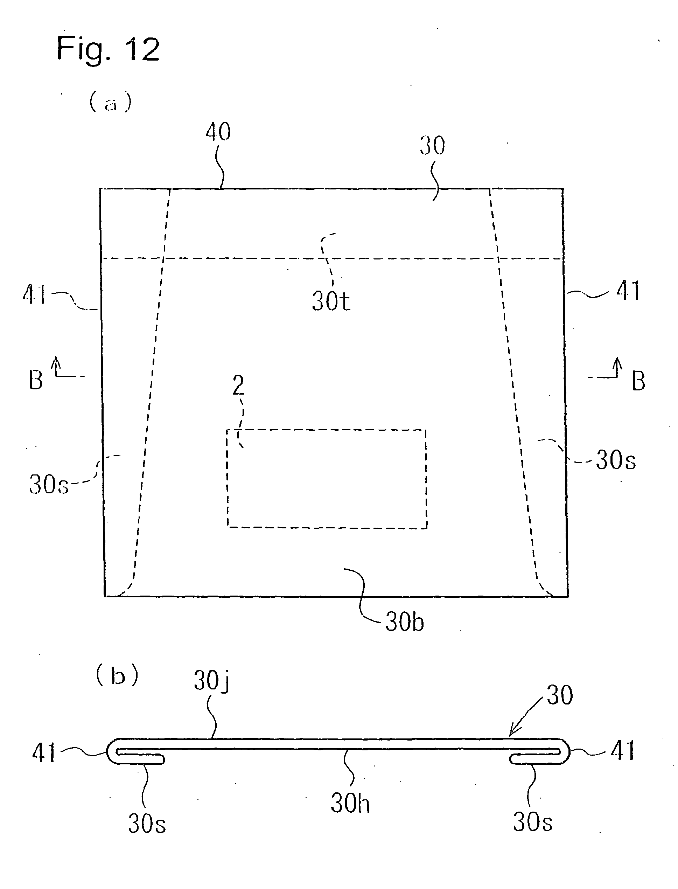

Next, with the present embodiment, a left side 30s and a right side 30s of the airbag 30 are folded back along vertical folding lines 41 and 41, respectively, to the side of the rear panel 30h, as shown in Fig. 12.

Subsequently, as shown in Fig. 13(b), the airbag 30 is folded back along a horizontal folding line 42 with a predetermined width away from the aforementioned horizontal folding line 40 to the side of the rear panel 30h, following which the airbag 30 is further folded back along a horizontal folding line 43 generally with the same width as the aforementioned predetermined width downward from the aforementioned horizontal folding line 42 to the side of the rear panel 30h, and furthermore, airbag 30 is further folded back along a horizontal folding line 44 generally with the same width as the aforementioned predetermined width downward from the aforementioned horizontal folding line 43 to the side of the rear panel 30h.

Thus, the portion of the airbag 30 from the aforementioned horizontal folding line 40 to the front face of the casing 2, i.e., the upper portion of the airbag 30 except the lower portion 30b, which is a portion upward from the lower portion 30b, is folded back to the side of the rear panel 30h in the shape of a roll, into a roll-folded portion 30R. The roll-folded portion 30R has been rolled clockwise as to the rolling center (folding line 40) in a cross-sectional view along the front-back direction of the vehicle with the passenger at the left side thereof (Fig. 13(b), in the same way as with the roll-folded portion 1R of the airbag 1 of the above-described passenger-leg-protection device shown in Fig. 1 through Fig. 8.

Next, as shown in Fig. 14, the lower portion 30b of the airbag 30 is folded back at the base end thereof along a horizontal folding line 45 to the passenger side (the left side in Fig. 14(b)) so as to be overlaid on the face of the roll-folded portion 30R on the passenger side.

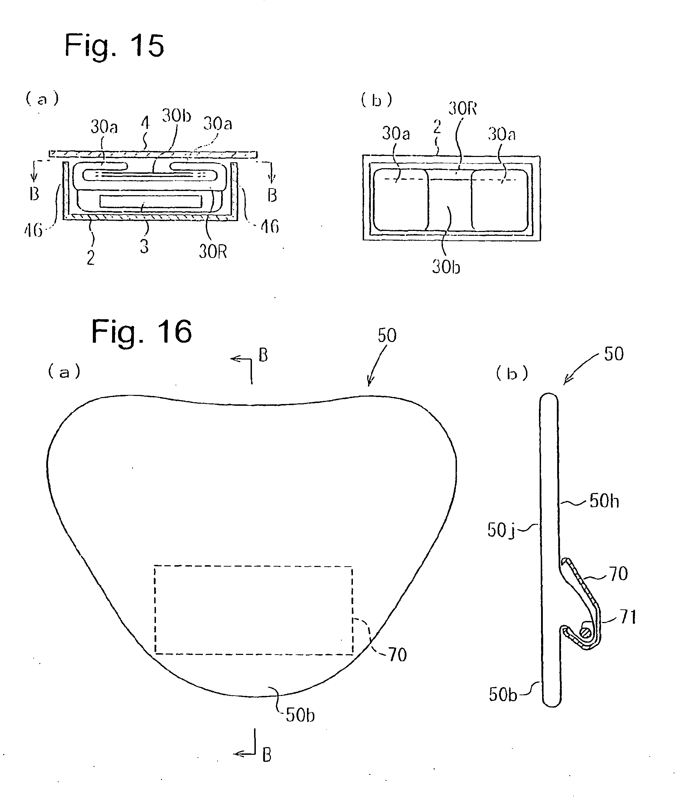

Subsequently, extending portions 30a and 30a of the roll-folded portion 30R, extending from both the left and right sides of the casing 2 as shown in Fig. 13(a), Fig. 13(c), and Fig. 14(a), are folded back at the base ends thereof (portions where the extending portions 30a protrude from the casing 2) along vertical folding lines 46 and 46 (see Fig. 15(a)) to the passenger side (upper side in Fig. 15(a)) so as to be overlaid on the face of the lower portion 30b on the passenger side, following which the roll-folded portion 30R is stored within the casing 2. Subsequently, the lid 4 is mounted on the casing 2, whereby the passenger-leg-protection device is formed.

Note that the panels 30j and 30h, and the side portions 30s and 30s, rolled inward into the roll-folded portion 30R are not shown in Fig. 13(c) and Fig. 15(a) in order to facilitate viewing the drawings.

Other configuration of the passenger-leg-protection device is the same as with the passenger-leg-protection device shown in Fig. 1 through Fig. 8 described above. The passenger-leg-protection device according to the present embodiment is provided within an interior panel in front of a seat, for example, such that the lid 4 and the interior panel form a flat face, as well.

With the automobile including the passenger-leg-protection device having such a configuration, in the event that the airbag 30 of the passenger-leg-protection device is inflated by the inflator 3 operating due to collision of the automobile, first, the gas emitted from the inflator 3 flows into the lower portion 30b of the airbag 30, whereby the lower portion 30b is inflated. The extending portions 30a and 30a extending from both the left and right sides of the roll-folded portion 30R, which have been folded back so as to be overlaid on the aforementioned lower portion 30b on the passenger side, are pressed to the passenger side due to inflation of the lower portion 30b so as to press the lid 4, whereby the lid 4 is opened, and the extending portions 30a and 30a expand to the left and right sides of the casing 2. The lower portion 30b expands downward from the casing 2, at the same time of these extending portions 30a and 30a protruding from the casing 2. Subsequently, the roll-folded portion 30R extends upward.

With the present embodiment, the aforementioned roll-folded portion 30R has been rolled clockwise in a longitudinal cross-sectional view of the vehicle with the passenger being on the left side thereof, as well, and accordingly, the roll-folded portion 30R smoothly extends upward in front of the legs of the passenger without snagging in front of the leg portions of the passenger while rotating in the counterclockwise direction in the cross-sectional view, i.e., such that the roll-folded portion 30R rotates in front of the leg portions of the passenger. Note that the left and right side portions 30s and 30s of the airbag 30 expand in the side direction of the airbag from the sides of the lower portion of the airbag, at the same time of the upward extension of the roll-folded portion 30R.

Immediately following the roll-folded portion 30R coming loose, the pleated portions 30t formed of the upper end of the airbag, which has been folded so as to be taken into the airbag 30, extends so as to protrude outward from the inner side of the airbag 30, whereby expansion of the airbag 30 is completed.

With the passenger-leg-protection device, at the time of the upper end of the airbag expanding outward from the airbag, which has been folded so as to be taken into the airbag 30 as a pleated portion 30t, the upper end of the airbag is forced outward due to the gas pressure within the airbag, thereby enabling smooth and quick expansion of the upper end outward from the airbag without necessitating an increase of the pressure of the gas within the airbag, i.e., without necessitating an increase of the performance of the inflator 3.

With the present embodiment, the lower portion 30b of the airbag 30 is expanded below the casing 2 prior to folding of the airbag 30, following which the portion upward from the lower portion 30b is roll-folded along a horizontal rolling-axis, into the roll-folded portion 30R, and furthermore, the lower portion 30b is folded back so as to be overlaid on the roll-folded portion 30R on the passenger side, following which the extending portions 30a and 30a, extending from both the left and right sides of the roll-folded portion 30R, are folded back so as to be overlaid on the lower portion 30b on the passenger side, and the folded airbag 30 is stored within the casing 2. Accordingly, at the time of inflation of the airbag 30, first, the lower portion 30b is inflated, and the extending portions 30a and 30a, which have been folded back so as to be overlaid on the lower portion 30b on the passenger side, are pushed out from the casing 2 due to the inflation of the lower portion 30b. Thus, both the left and right sides of the roll-folded portions 30R of the roll-folded portion 30R come loose at the early stage of the inflation of the airbag 30, thereby enabling quick extension of the roll-folded portion 30R.

Note that in the present embodiment, while description has been made regarding an arrangement wherein the left and right sides 30s and 30s of the airbag 30 are folded back to the side of the rear panel 30h of the airbag 30 without forming pleated portions on both the left and right sides 30s and 30s folded on the inner side of the airbag 30, an arrangement may be made wherein pleated portions are formed on both the left and right sides 30s and 30s folded on the inner side of the airbag 30.

Next, description will be made regarding another embodiment with reference to Fig. 16 through Fig. 27.

Fig. 16 through Fig. 27 are explanatory diagrams for describing an airbag-folding procedure for a passenger-leg-protection device according to another embodiment, wherein Fig. (b) in each is a cross-sectional diagram taken along line B-B in the corresponding Fig. (a).

With the present embodiment, an airbag 50 is formed in a shape wherein the width in the horizontal direction becomes smaller the closer to the lower side, as shown in Fig. 16. The airbag 50 includes a casing 70 connected to a rear panel 50h around the lower portion of the airbag 50, for storing a folded article of the airbag 50. Reference character 71 denotes an inflator for inflating the airbag 50.

Note that the inflator 71 is included within the airbag 50. Stud bolts (not shown) protrude from the inflator 71 or a holder (not shown) for holding the inflator 71 so as to pass through the rear panel 50h around the lower portion of the airbag 50, and the rear face of the casing 70, and are fixed with nuts (not shown). By fixing the stud bolts with the nuts as described above, the rear panel 50h of the airbag 50, around the lower portion thereof, is held between the inflator 71 or the holder thereof and the rear face of the casing 70, as well as the inflator 71 being fixed to the casing 70.

The airbag 50 has a configuration wherein the lower portion 50b of the airbag 50 inflates below the casing 70 at the time of inflation thereof.

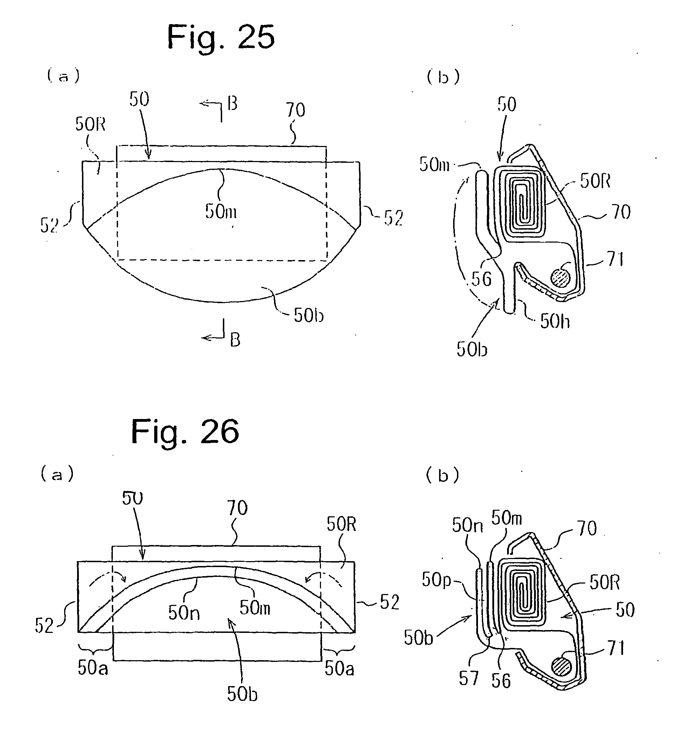

With the present embodiment, a pleated portion 50p (see Fig. 26(b)) is formed on the lower portion 50b at the time of folding of the airbag 50.

Description will be made below regarding a procedure for folding the airbag 50 according to the present embodiment. Note that with the present embodiment, while the airbag 50 is expanded flat, following which the airbag 50 is folded while being placed on a flat working bench along with the casing 70, the airbag 50 is shown with the airbag 50 being expanded along the perpendicular face in Fig. 16, Fig. 17, Fig. 18(a), Fig. 19 through Fig. 26, and Fig. 27(a) in order to describe the passenger-leg-protection device mounted on the automobile. Furthermore, the passenger-leg-protection device is shown with the vertical direction in each diagram generally matching the vertical direction of the passenger-leg-protection device mounted in an automobile in the aforementioned drawings.

First, the airbag 50 is extracted from the casing 70, and is expanded flat. With the present embodiment, at the same time, a lower portion 50b of the airbag 50 is expanded downward from the casing 70, as shown in Fig. 16.

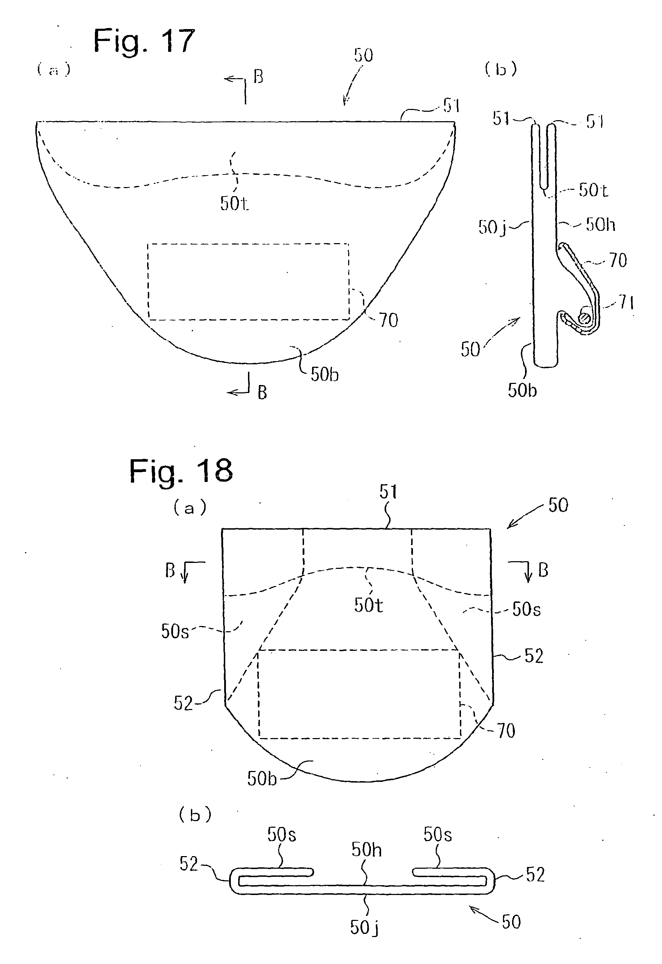

Next, as shown in Fig. 17, the airbag 50 is folded along a horizontal folding line 51 such that the upper side of the airbag 50 is taken into the airbag 50, so as to form a pleated portion 50t, formed of the upper side of the airbag, between the front panel 50j and the rear panel 50h.

Next, with the present embodiment, a left side 50s and a right side 50s of the airbag 50 are folded back along a vertical folding lines 52 and 52, respectively, to the side of the rear panel 50h, as shown in Fig. 18.

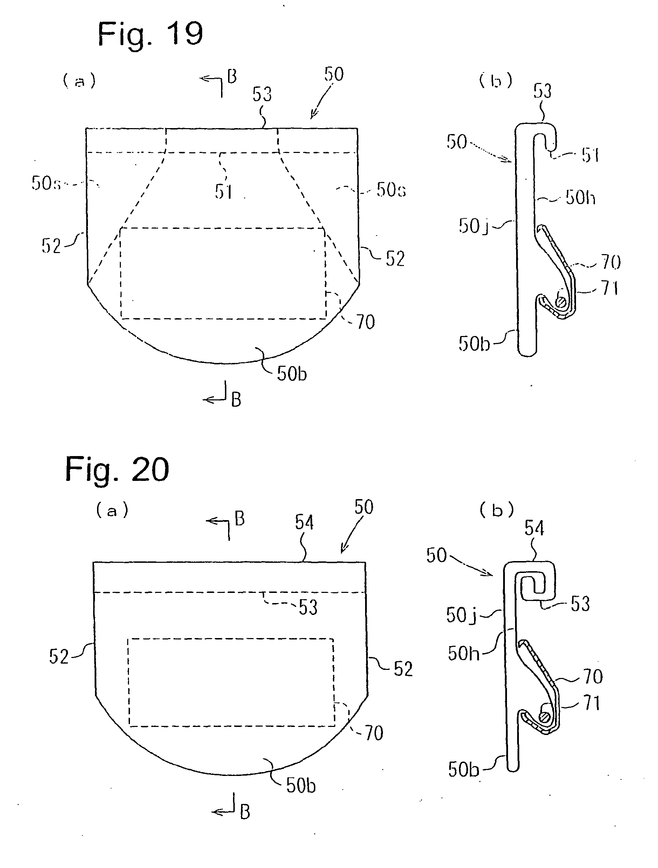

Subsequently, as shown in Fig. 19 through Fig. 20, the airbag 50 is folded back along a horizontal folding line 53 with a predetermined width away from the aforementioned horizontal folding line 51 to the side of the rear panel 50h (Fig. 19), following which the airbag 50 is further folded back along a horizontal folding line 54 with a predetermined width away from the aforementioned horizontal folding line 53 to the side of the rear panel 50h (Fig. 20). As described above, the airbag 50 is folded back along the horizontal folding lines 53 and 54 to the side of the rear panel 50h, and accordingly, the portion of the airbag 50, extending above the casing 70, is roll-folded as to the aforementioned horizontal folding line 51 toward the casing 70, whereby a roll-folded portion 50R is formed.

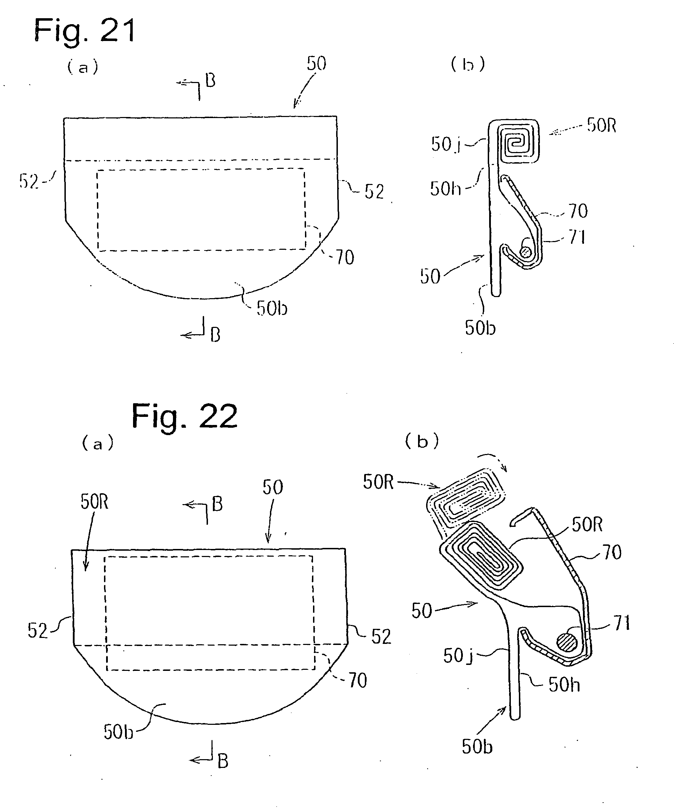

Subsequently, as shown in Fig. 21 through Fig. 23, the remaining portion of the roll-folded portion 50R following the horizontal folding line 54 is further roll-folded back up to the roll-folding portion 50R reaching the front face of the casing 70 (reference characters of horizontal folding lines following the horizontal folding line 54 will be omitted). Thus, the entire portion of the airbag 50, extending above the casing 70, except for the lower portion 50b, forms the roll-folded portion 50R.

Note that the pleated portion 50t formed on the upper side of the airbag 50 is not shown in Fig. 19 through Fig. 23, and Fig. 24 through Fig. 26, described above, in order to facilitate viewing the drawings.

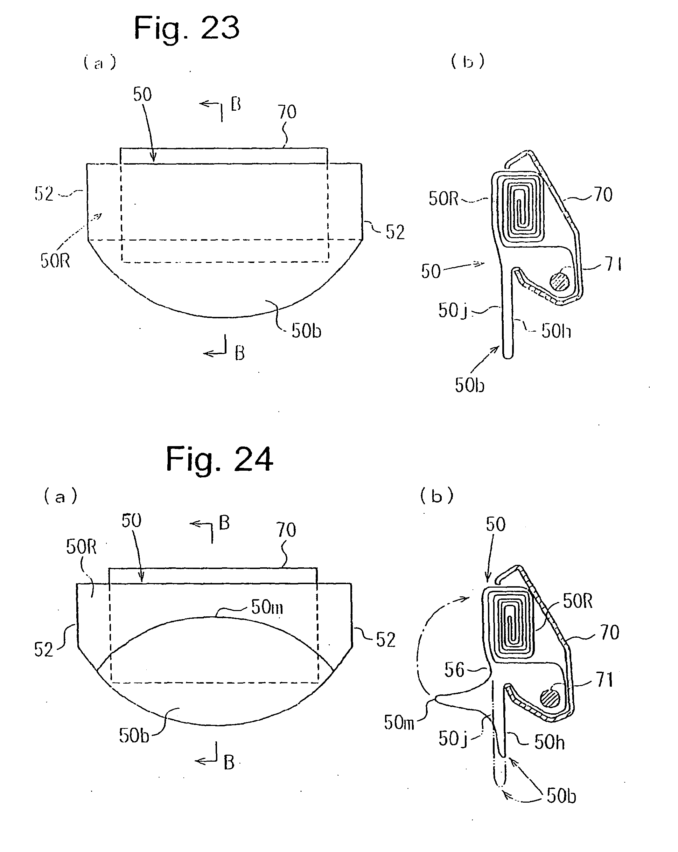

Next, as shown in Fig. 24 through Fig. 25, an intermediate protrusion 50m is formed on the front panel 50h on the lower portion 50b by picking up the front panel 50j to the front side (passenger side) with the front panel 50j being distant from the rear panel 50h (Fig. 24), and the portion from the intermediate protrusion 50m to the border between the lower portion 50b and the roll-folded portion 50R is folded back upward along a horizontal folding line 56 positioned around the border so as to be overlaid on the front face of the roll-folded portion 50R (Fig. 25). Subsequently, the remaining portion from the aforementioned intermediate protrusion 50m to the rear panel 50h is folded back downward from the intermediate protrusion 50m.

Subsequently, as shown in Fig. 26, the portion with a predetermined width downward from the aforementioned intermediate protrusion 50m is folded back upward along a horizontal folding line 57, and the remaining portion from the horizontal folding line 57 is folded back upward from the horizontal folding line 57 thereof, so as to form a double-folded lower portion, wherein the remaining portion is overlaid on the front face of the portion between the aforementioned intermediate protrusion 50m and the horizontal folding line 57.

Thus, as shown in Fig. 26(b), the portion of the lower portion 50b of the airbag 50, between the aforementioned intermediate protrusions 50m and 50n, is folded within the airbag, whereby the pleated portion 50p is formed on the lower portion 50b thereof.

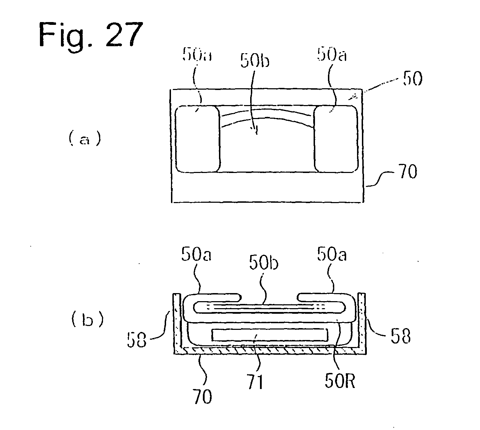

Subsequently, extending portions 50a and 50a of the roll-folded portion 50R, extending from both the left and right sides of the casing 70 as shown in Fig. 26(a), are folded back at the base ends thereof (portions where the extending portions 50a protrude from the casing 70) along vertical folding lines 58 and 58 (see Fig. 27(b)) to the front side (upper side in Fig. 27(b)) so as to be overlaid on the front face of the lower portion 50b, following which the roll-folded portion 50R is stored within the casing 70. Subsequently, a lid (not shown) is mounted on the casing 70, whereby the passenger-leg-protection device is formed.

Note that the panels 50j and 50h, and the side portions 50s and 50s, rolled inward into the roll-folded portion 50R are not shown in Fig. 27(b) in order to facilitate viewing of the drawings.

Other configurations of the passenger-leg-protection device are the same as with the passenger-leg-protection device shown in Fig. 1 through Fig. 8 described above. The passenger-leg-protection device according to the present embodiment is provided within an interior panel in front of a seat, for example, such that the aforementioned lid and the interior panel form a flat face, as well.

According to the present embodiment, in the event that the airbag 50 of the passenger-leg-protection device is inflated by the inflator 71 operating due to collision of the automobile, first, the gas emitted from the inflator 71 flows into the lower portion 50b of the airbag 50, whereby the lower portion 50b is inflated. The extending portions 50a and 50a, extending from both the left and right sides of the roll-folded portion 50R, which have been folded back so as to be overlaid on the front face of the aforementioned lower portion 50b, are pressed to the passenger side due to inflation of the lower portion 50b so as to press the aforementioned lid, whereby the lid is opened, and the extending portions 50a and 50a expand to the left and right sides of the casing 70. The lower portion 50b expands downward from the casing 70, at the same time of these extending portions 50a and 50a protruding from the casing 70. With the present embodiment, immediately following the lower portion 50b thus folded coming loose, the pleated portion 50p of the lower portion 50b, folded within the airbag 50, extends so as to protrude and be discharged from the inner side of the airbag 50.

Following the lower portion 50b expanding downward from the casing 70, the roll-folded portion 50R extends upward.

The aforementioned roll-folded portion 50R according to the present embodiment also smoothly extends upward in front of the legs of the passenger without snagging while rotating in the counterclockwise direction, the roll-folded portion 50R rotating in front of the leg portions of the passenger. Note that the left and right side portions 50s and 50s of the airbag 50 expand in the side direction of the airbag from the sides of the lower portion of the airbag, at the same time of the upward extension of the roll-folded portion 50R.

Immediately following the roll-folded portion 50R coming loose, the pleated portions 50t formed of the upper end of the airbag, which has been folded so as to be taken into the airbag 50, extends so as to protrude outward and be discharged from the inner side of the airbag 50, whereby expansion of the airbag 50 is completed.

With the passenger-leg-protection device, the lower portion 50b of the airbag is folded back so as to form the pleated portion 50p so as to be taken into the inner side of the airbag 50, as well as the upper portion of the airbag being folded back so as to form the pleated portion 50t so as to be taken into the airbag 50. Accordingly, at the time of the upper portion and the lower portion 50b of the airbag extending outward from the airbag, the aforementioned upper portion and lower portion 50b of the airbag are forced outward due to the gas pressure within the airbag, thereby enabling smooth and quick expansion of the upper portion and the lower portion 50b of the airbag without necessitating an increase of the pressure of the gas within the airbag, i.e., without necessitating an increase of the performance of the inflator 71.

Note that in the present embodiment, while description has been made regarding an arrangement wherein the left and right sides 50s and 50s of the airbag 50 are folded back to the side of the rear panel 50h of the airbag 50 without forming pleated portions on both the left and right sides 50s and 50s folded on the inner side of the airbag 50, an arrangement may be made wherein pleated portions are formed on both the left and right sides 50s and 50s folded on the inner side of the airbag 50.

The above-described embodiments are but example arrangements according to the present invention, and other embodiments can be implemented within the scope of the claims.

## Claims

1. A passenger-leg-protection device comprising:
an airbag (30; 50) for inflating in front of the leg portions of a passenger in order to protect said leg portions;
a casing (2; 70) for storing said folded airbag (30; 50); and
gas generating means (3; 71) for inflating said airbag (30; 50),
wherein said airbag (30; 50) is formed of panels of a front panel (30j; 50j) for facing the passenger at the time of completion of inflation, and a rear panel (30h; 50h) disposed on the opposite side from said front panel (30j; 50j),
and wherein said airbag (30; 50) is folded into a folded portion having a configuration wherein at least a part of the perimeter of said airbag (30; 50) at the time of completion of inflation is folded inward between said front panel (30j; 50j) and said rear panel (30h; 50h),
**characterized in that**
a lower portion (30b; 50b) of said airbag (30; 50) is expanded below said casing (2; 70) prior to folding, following which an upper portion above said lower portion (30b; 50b) is roll-folded as to a rolling axis extending in the horizontal direction of a passenger, into a roll-folded portion (30R; 50R), and said lower portion (30b; 50b) is folded back so as to be overlaid on said roll-folded portion (30R; 50R) on the passenger side, following which both the left and right sides (30a; 50a) of said roll-folded portion (30R; 50R) are folded back so as to be overlaid on said lower portion (30b; 50b) on the passenger side, whereby said folded portion is formed.

2. A passenger-leg-protection device according to Claim 1, wherein said folded portion of said airbag (30; 50) has a configuration wherein the upper side of said airbag (30; 50) at the time of completion of inflation is folded inward between said front panel (30j; 50j) and said rear panel (30h; 50h).

3. A passenger-leg-protection device according to Claim 1, wherein said folded portion of said airbag (30; 50) has a configuration wherein side portions (30s; 50s) of said airbag (30; 50) at the time of completion of inflation are folded inward between said front panel (30j; 50j) and said rear panel (30h; 50h).

4. A passenger-leg-protection device according to Claim 1, wherein said folded portion of said airbag (30; 50) has a configuration wherein the upper side and side portions (30s; 50s) of said airbag (30; 50) at the time of completion of inflation are folded inward between said front panel (30j; 50j) and said rear panel (30h; 50h).

5. A passenger-leg-protection device according to any of Claims 2 through 4, wherein said folded portion of said airbag (30; 50) has a configuration wherein the lower side (30b; 50b) of said airbag (30; 50) at the time of completion of inflation is folded inward between said front panel (30j; 50j) and said rear panel (30h; 50h).

6. A passenger-leg-protection device according to any of Claims 1 through 5, wherein said front panel (30j; 50j) and said rear panel (30h; 50h) form a single pleated portion (30t; 50t) on the perimeter of the folded portion of said airbag (30; 50), folded inward between said front panel (30j; 50j) and said rear panel (30h; 50h).

7. A passenger-leg-protection device according to any of Claims 1 through 5, wherein said front panel and said rear panel form two or more pleated portions on the perimeter of the folded portion of said airbag, folded inward between said front panel and said rear panel.

8. A passenger-leg-protection device according to any one of the preceding Claims, wherein said folded portion of said airbag (1) has a configuration wherein both the left and right sides (1a) of said roll-folded portion (1R) are accordion-folded (1F) so as to be stored within said casing (2).

9. A passenger-leg-protection device according to any one of the preceding Claims, wherein said folded portion of said airbag (1) has a configuration wherein both the left and right sides (1a) of said roll-folded portion (1R) are roll-folded (1r) so as to be stored within said casing (2).

## Patentansprüche

1. Insassenbeinschutzvorrichtung umfassend:
einen Airbag (30; 50), um sich vor den Beinabschnitten eines Insassen aufzublasen, um die Beinabschnitte zu schützen;
ein Gehäuse (2; 70), um den gefalteten Airbag (30; 50) aufzunehmen; und
Gas erzeugende Mittel (3; 71), um den Airbag (30; 50) aufzublasen,
wobei der Airbag (30; 50) aus Stoffbahnen, einer vorderen Stoffbahn (30j; 50j), um dem Insassen bei einem Abschluss eines Aufblasens gegenüberzuliegen, und einer hinteren Stoffbahn (30h; 50h), welche auf der der vorderen Stoffbahn (30j; 50j) gegenüberliegenden Seite angeordnet ist, ausgebildet ist,
und wobei der Airbag (30; 50) in einen gefalteten Abschnitt gefaltet ist, welcher eine Konfiguration aufweist, wobei mindestens ein Teil des Umfangs des Airbags (30; 50) bei dem Abschluss des Aufblasens zwischen der vorderen Stoffbahn (30j; 50j) und der hinteren Stoffbahn (30h; 50h) nach innen gefaltet ist,
**dadurch gekennzeichnet,**
**dass** ein unterer Abschnitt (30b; 50b) des Airbags (30; 50) unter dem Gehäuse (2; 70) vor einem Falten ausgebreitet ist, wobei darauf folgend ein oberer Abschnitt über dem unteren Abschnitt (30b; 50b) bezüglich einer Rollenachse, welche sich in der horizontalen Richtung eines Insassen erstreckt, rollenartig in einen rollenartig gefalteten Abschnitt (30R; 50R) gefaltet wird, und wobei der untere Abschnitt (30b; 50b) zurückgefaltet wird, um auf dem rollenartig gefalteten Abschnitt (30R; 50R) auf der Insassenseite zu liegen, wobei darauf folgend sowohl die linke als auch die rechte Seite (30a; 50a) des rollenartig gefalteten Abschnitts (30R; 50R) derart zurückgefaltet werden, dass sie auf dem unteren Abschnitt (30b; 50b) auf der Insassenseite liegen, wobei der gefaltete Abschnitt ausgebildet wird.

2. Insassenbeinschutzvorrichtung nach Anspruch 1, **dadurch gekennzeichnet, dass** der gefaltete Abschnitt des Airbags (30; 50) eine Konfiguration aufweist, wobei die obere Seite des Airbags (30; 50) bei dem Abschluss des Aufblasens zwischen der vorderen Stoffbahn (30j; 50j) und der hinteren Stoffbahn (30h; 50h) nach innen gefaltet sind.

3. Insassenbeinschutzvorrichtung nach Anspruch 1, **dadurch gekennzeichnet, dass** der gefaltete Abschnitt (30; 50) eine Konfiguration aufweist, wobei seitliche Abschnitte (30s; 50s) des Airbags (30; 50) bei dem Abschluss des Aufblasens zwischen der vorderen Stoffbahn (30j; 50j) und der hinteren Stoffbahn (30h; 50h) nach innen gefaltet sind.

4. Insassenbeinschutzvorrichtung nach Anspruch 1, **dadurch gekennzeichnet, dass** der gefaltete Abschnitt des Airbags (30; 50) eine Konfiguration aufweist, wobei die obere Seite und die seitlichen Abschnitte (30s; 50s) des Airbags (30; 50) bei dem Abschluss des Aufblasens zwischen der vorderen Stoffbahn (30j; 50j) und der hinteren Stoffbahn (30h; 50h) nach innen gefaltet sind.

5. Insassenbeinschutzvorrichtung nach einem der Ansprüche 2 bis 4, **dadurch gekennzeichnet, dass** der gefaltete Abschnitt des Airbags (30; 50) eine Konfiguration aufweist, wobei die untere Seite (30b; 50b) des Airbags (30; 50) bei dem Abschluss des Aufblasens zwischen der vorderen Stoffbahn (30j; 50j) und der hinteren Stoffbahn (30h; 50h) nach innen gefaltet ist.

6. Insassenbeinschutzvorrichtung nach einem der Ansprüche 1 bis 5, **dadurch gekennzeichnet, dass** die vordere Stoffbahn (30j; 50j) und die hintere Stoffbahn (30h; 50h) einen einzelnen plissierten Abschnitt (30t; 50t) auf dem Umfang des gefalteten Abschnitts des Airbags (30; 50) ausbilden, welcher zwischen der vorderen Stoffbahn (30j; 50j) und der hinteren Stoffbahn (30h; 50h) nach innen gefaltet ist.

7. Insassenbeinschutzvorrichtung nach einem der Ansprüche 1 bis 5, **dadurch gekennzeichnet, dass** die vordere Stoffbahn und die hintere Stoffbahn zwei oder mehr plissierte Abschnitte auf dem Umfang des gefalteten Abschnitts des Airbags ausbilden, welche zwischen der vorderen Stoffbahn und der hinteren Stoffbahn nach innen gefaltet sind.

8. Insassenbeinschutzvorrichtung nach einem der vorhergehenden Ansprüche, **dadurch gekennzeichnet, dass** der gefaltete Abschnitt des Airbags (1) eine Konfiguration aufweist, wobei sowohl die linke als auch die rechte Seite (1a) des rollenartig gefalteten Abschnitts (1 R) zickzackartig gefaltet ist (1 F), um so in das Gehäuse (1) aufgenommen zu werden.

9. Insassenbeinschutzvorrichtung nach einem der vorhergehenden Ansprüche, **dadurch gekennzeichnet, dass** der gefaltete Abschnitt des Airbags (1) eine Konfiguration aufweist, wobei sowohl die linke als auch die rechte Seite (1a) des rollenartig gefalteten Abschnitts (1R) rollenartig gefaltet werden (1 r), um so in dem Gehäuse (2) aufgenommen zu werden.

## Revendications

1. Un dispositif de protection des jambes pour passager, comprenant :
un coussin gonflable de sécurité (30 ; 50), pour gonflage à l'avant des parties jambes d'un passager, afin de protéger lesdites parties jambes ;
un boîtier (2 ; 70), pour stocker ledit coussin gonflable de sécurité (30 ; 50) lorsqu'il est à l'état plié ; et
des moyens générateur de gaz (3 ; 71), pour gonfler ledit coussin gonflable de sécurité (30 ; 50),
dans lequel ledit coussin gonflable de sécurité (30 ; 50) est formé de panneaux, comprenant un panneau avant (30j ; 50j) pour être placé face au passager au moment de l'achèvement du gonflage, et un panneau arrière (30h ; 50h) disposé sur la face opposée audit panneau avant (30j ; 50j),
et dans lequel ledit coussin gonflable de sécurité (30 ; 50) est plié en formant une partie pliée, présentant une configuration dans laquelle au moins une partie du périmètre dudit coussin gonflable de sécurité (30 ; 50), au moment de l'achèvement du gonflage, est pliée intérieurement entre ledit panneau avant (30j ; 50j) et ledit panneau arrière (30h ; 50h),
**caractérisé en ce que**
une partie inférieure (30b ; 50b) dudit coussin gonflable de sécurité (30 ; 50) est étendue au-dessous dudit boîtier (2 ; 70) avant le pliage, à la suite de quoi, une partie supérieure, située au-dessus de ladite partie inférieure (30b ; 50b), est pliée-roulée, de manière qu'un axe de roulement s'étende dans la direction horizontale d'un passager, en donnant une partie pliée-roulée (30R ; 50R), et ladite partie inférieure (30b ; 50b) est repliée de manière à être placée en chevauchement sur ladite partie roulée-pliée (30R ; 50R) sur le côté passager, à la suite de quoi, les deux côtés gauche et droite (30a ; 50a) de ladite partie roulée-pliée (30R ; 50R) sont repliés pour être placés en chevauchement sur ladite partie inférieure (30b ; 50b) du côté passager, de manière à former ladite partie pliée.

2. Un dispositif de protection des jambes pour passager selon la revendication 1, dans lequel ladite partie pliée dudit coussin gonflable de sécurité (30 ; 50) présente une configuration, dans laquelle le côté supérieur dudit coussin gonflable de sécurité (30 ; 50), au moment de l'achèvement du gonflage, est plié vers l'intérieur, entre ledit panneau avant (30j ; 50j) et ledit panneau arrière (30h ; 50h).

3. Un dispositif de protection des jambes pour passager selon la revendication 1, dans lequel ladite partie pliée dudit coussin gonflable de sécurité (30 ; 50) présente une configuration dans laquelle des parties latérales (30s ; 50s) dudit coussin gonflable de sécurité (30 ; 50), au moment de l'achèvement du gonflage, sont pliées vers l'intérieur entre ledit panneau avant (30j ; 50j) et ledit panneau arrière (30h ; 50h).

4. Un dispositif de protection des jambes pour passager selon la revendication 1, dans lequel ladite partie pliée dudit coussin gonflable de sécurité (30 ; 50) présente une configuration, dans laquelle le côté supérieur ainsi que les parties latérales (30s ; 50s) dudit coussin gonflable de sécurité (30 ; 50), au moment de l'achèvement du gonflage, est plié vers l'intérieur, entre ledit panneau avant (30j ; 50j) et ledit panneau arrière (30h ; 50h).

5. Un dispositif de protection des jambes pour passager selon l'une quelconque des revendications 2 à 4, dans lequel ladite partie pliée dudit coussin gonflable de sécurité (30 ; 50) présente une configuration, dans laquelle le côté inférieur (30b ; 50b) dudit coussin gonflable de sécurité (30 ; 50), au moment de l'achèvement du gonflage, est plié vers l'intérieur, entre ledit panneau avant (30j ; 50j) et ledit panneau arrière (30h ; 50h).

6. Un dispositif de protection des jambes pour passager selon l'une quelconque des revendications 1 à 5, dans lequel ledit panneau avant (30j ; 50j) et ledit panneau arrière (30h ; 50h) forment une partie plissée (30t ; 50t) unique sur le périmètre de la partie pliée dudit coussin gonflable de sécurité (30 ; 50), pliée vers l'intérieur entre ledit panneau avant (30j ; 50j) et ledit panneau arrière (30h ; 50h).

7. Un dispositif de protection des jambes pour passager selon l'une quelconque des revendications 1 à 5, dans lequel ledit panneau avant et ledit panneau arrière forment deux parties plissées, ou plus, sur le périmètre de la partie pliée dudit coussin gonflable de sécurité, pliée(s) vers l'intérieur, entre ledit panneau avant et ledit panneau arrière.

8. Un dispositif de protection des jambes pour passager selon l'une quelconque des revendications précédentes, dans lequel ladite partie pliée dudit coussin gonflable de sécurité (1) présente une configuration dans laquelle à la fois les deux côtés gauche et droit (1a) de ladite partie roulée-pliée (1R) sont pliés en accordéon (1F), pour être stockés à l'intérieur dudit boîtier (2).

9. Un dispositif de protection des jambes pour passager selon l'une quelconque des revendications précédentes, dans lequel ladite partie pliée dudit coussin gonflable de sécurité (1) présente une configuration dans laquelle à la fois les côtés gauche et droit (1a) de ladite partie roulée-pliée (1R) sont pliés-roulés (1r) pour être stockés à l'intérieur dudit boîtier (2).
